# EUROPEAN PATENT APPLICATION

(11) **EP 2 702 889 A1**
(43) Date of publication of application: **05.03.2014**
(21) Application number: 12398004.7
(22) Date of filing: 29.08.2012
(51) Int. Cl.: A43D 25/18, A43B 9/12, C09J 175/04

(54) **Footwear parts gluing process using powder adhesive**

(71) Applicant: Artecola Indústrias Químicas Ltda., 93700-000 Campo Bom RS (BR)
(72) Inventor: Jardel Luis de Mello, Campo Bom, RS (BR)
(74) Representative: Pereira da Cruz, Jorge Afonso

(57) **Abstract**

A process of gluing footwear parts using a powder adhesive that eliminates the conventional stages of drying required after the application of fluid adhesive to the substrate surface and of cooling to solidify the glue after pressing is disclosed herein. The process comprises the stages of preparing the surface and removing impurities from substrates by applying a slow-drying compound featuring bonding properties; applying the polyurethane-base powder adhesive with a grain size between 30 and 200 microns by dispersing it with pistols; removing the excess adhesive; reactivating the powder adhesive applied to the substrate surface at temperatures between 60° and 80°C; joining the substrate surfaces that received the adhesive, and pressing.

## Description

### FIELD OF INVENTION

This invention is related to a process for gluing footwear parts using powder adhesive. More specifically, it comprises the gluing of outsoles, midsoles, overlain parts, linings, socks, insoles, assembly insoles, and uppers by applying a powder adhesive in a controlled and homogeneous way on a substrate surface.

### BACKGROUND OF THE INVENTION

In the course of the past few decades, the Brazilian footwear industry has been set up based on the intensive use of solvent-base adhesives such as butanone, acetone, ethyl acetate, toluene, mixtures of butanone or methylene chloride, which are hazardous for workers subject to inhaling them and for the environment as residues are discarded. One characteristic of those adhesives is that the majority of their composition (70% to 85%) is solvent, while the adhesive per se comprises 15% to 30% of the product.

Solvent-base adhesives work in a simple manner: applied manually or by machines, the solvent evaporates and leaves an adhesive polymer film.

Although solvent-base adhesives remain the ones used the most, due to their versatility and history of good results, the market has been using environmentally friendly products containing less volatile organic compounds - that is, water-base adhesives, which provide high initial and final mechanical resistance, as well as great heat resistance and, especially, are free from health hazardous components.

Solvent- and water-base adhesives used in the footwear industry are applied in an smooth coat over the surfaces to be glued, which can be done manually by the operator using spatulas, brushes, rolls, semi-automatic methods using compressed air pistols and pressure or yet automatic continuous application methods using sprays or transfer cylinders.

However, such adhesives are always in fluid form and, in case there is no proper control of the application and drying time, there may be problems with the adhesion or the adhesive cohesion, (affecting the gluing) compromising the gluing.

Additionally, if the adhesive is unevenly applied to the substrate, during drying process, the excess adhesive make up quite a thick layer under which the solvent remain in liquid form. If they are pressed in that condition, there may occur gluing process failures which lead to rework or loss of the part. Once the adhesive has been applied, it has to undergo drying, reactivation, and controlled pressing.

Therefore, conventionally the process of gluing footwear parts comprises many phases, a few of them manual, and which require the control of variables such as time, temperature and pressure so as to deliver efficient gluing that does not damage the footwear.

Additionally, the use of fluid adhesives does not allow control over the product dispersion on the substrate surface, creating excesses that may damage the final-quality of the product.

In order to avoid such inconveniences, the state of the art describes technical solutions that use adhesive films, such as in document US2005019529, which describes the application of an adhesive film on the footwear for fiber adhesion, using electrostatic energy to attract and position the fibers, and document EP0919151, which describes the application of a thermoplastic film containing metallic particles, making it possible to reactivate it by induction for various gluing.

Therefore, besides the traditional methods of gluing footwear parts using solvent- or water-base fluid adhesives, the state of the art describes adhesive films applied by an electrostatic process and induction-based heating.

Conversely, the subject-matter of this invention is a process to glue footwear parts using a powder adhesive, thus eliminating the need to dissolve it with solvents or water and improving product dispersion on the substrate surface, thereby eliminating the drying stages and providing a low cost process.

### SUMMARY OF THE INVENTION

One aspect of the invention is the process of gluing footwear parts using a powder adhesive that eliminates the use of fluid adhesives.

Another aspect of the invention is the process of gluing footwear parts using a powder adhesive that eliminates the drying phase.

Another aspect of the invention is the process of gluing footwear parts using a powder adhesive that eliminates both excesses during product dispersion and product waste, considering the residues that occasionally may not adhere to the substrate surface are fully reused. Another aspect of the invention is the process of gluing footwear parts using a powder adhesive that reduces losses due to rework required by gluing flaws.

### DETAILED DESCRIPTION OF THE INVENTION

The process of gluing footwear parts using a powder adhesive comprises the stages of:
a) preparing the surface and removing impurities from substrates, such as soles and uppers, by applying a compound featuring bonding properties;
b) applying the polyurethane-base powder adhesive by dispersing it using pistols;
c) removing excess adhesive;
d) reactivating the powder adhesive applied to the substrate surface at temperatures between 60° and 80°C;
e) joining the substrate surfaces that received the adhesive;
f) pressing.

Unlike the conventional process, the stages of drying required after the application of liquid adhesive to the substrate surface and of cooling to solidify the glue after pressing are eliminated, considering the use of a powder adhesive.

The compound containing bonding properties comprises a mixture of slow-drying organic solvents that allow the powder adhesive to evenly bond to the substrate.

The polyurethane-base powder adhesive has a grain size between 30 to 200 microns.

## Claims

1. A process of gluing footwear parts using a powder adhesive comprising the stages of:
a) preparing the surface and removing impurities from substrates by applying a compound featuring bonding properties;
b) applying the polyurethane-base powder adhesive by dispersing it using pistols;
c) removing excess adhesive;
d) reactivating the powder adhesive applied to the substrate surface at temperatures between 60° and 80°C;
e) joining the substrate surfaces that received the adhesive;
f) pressing.

2. The process according to claim 1, **characterized in that** the compound containing bonding properties comprises a mixture of slow-drying organic solvents.

3. The process according to claim 1, **characterized in that** the polyurethane-base powder adhesive has a grain size between 30 and 200 microns.
